# EUROPÄISCHE PATENTSCHRIFT

(11) **EP 4 167 448 B1**
(45) Veröffentlichungstag und Bekanntmachung des Hinweises auf die Patenterteilung: **15.07.2026**
(21) Anmeldenummer: 21202908.6
(22) Anmeldetag: 15.10.2021
(51) Int. Cl.: H02K 9/02, H02K 7/18, H02K 5/20, F03D 9/25, F03D 80/60

(54) **GENERATOR UND WINDENERGIEANLAGE**
GENERATOR AND WIND TURBINE
GÉNÉRATEUR ET ÉOLIENNE

(43) Veröffentlichungstag der Anmeldung: 19.04.2023
(73) Patentinhaber: Wobben Properties GmbH, 26607 Aurich (DE)
(72) Erfinder: Enskonatus, Kai, Hinte (DE); Müller, Michael, Wiegboldsbur (DE); Philipp, Alexander, Reilingen (DE)
(74) Vertreter: Eisenführ Speiser

(56) Entgegenhaltungen:
- EP-A1- 2 182 618
- EP-A1- 3 270 491
- DE-A1- 102014 208 791
- US-B2- 10 495 068

## Beschreibung

Die Erfindung betrifft einen Generator, insbesondere einen Generator für eine Windenergieanlage. Ferner betrifft die Erfindung eine Windenergieanlage.

Windenergieanlagen emittieren im Betrieb Schall. Grund hierfür sind beispielsweise Verwirbelungen des Windes an den Rotorblättern der Windenergieanlagen. Auch Aggregate innerhalb von Windenergieanlagen stellen im Betrieb mögliche Schallquellen dar. Eine wesentliche Schallquelle sind beispielsweise Kühlvorrichtungen, die etwa zur Kühlung eines (elektrischen) Generators von Windenergieanlagen einen Luftstrom erzeugen. Durch die Förderung und Umlenkung des Luftstroms innerhalb des Generators, insbesondere durch schmale Spalte und dergleichen, entstehen auch hierbei regelmäßig Verwirbelungen, die Schall emittieren.

Den Schall nehmen Menschen und Tiere in einem bestimmten Frequenzbereich als Geräusch mit einer bestimmten Lautstärke wahr. Die Lautstärke ist durch den Schalldruckpegel charakterisiert. Zum Schutz von Menschen und Tieren dürfen Windenergieanlagen im Betrieb eine bestimmte Lautstärke (Grenzwert) aufgrund gesetzlicher Vorgaben nicht überschreiten. Der zulässige Grenzwert, den eine Windenergieanlage nicht überschreiten darf, hängt üblicherweise vom Standort der Windenergieanlage ab, an dem diese betrieben wird. Beispielsweise ist der Grenzwert in der Nähe von Ortschaften in der Regel geringer als abseits von Ortschaften.

Um den Wirkungsgrad von Windenergieanlagen zu verbessern, nimmt die Nabenhöhe und der Durchmesser des aerodynamischen Rotors von Windenergieanlagen immer weiter zu.

Bei größeren Windenergieanlagen nimmt allerdings die Schallausbreitung und insoweit auch die Schallimmission zu. Ferner kann mit der zunehmenden Größe der Windenergieanlagen auch deren Schallemission zunehmen. Ursache hierfür kann der höhere Bedarf an Kühlleistung zur Kühlung des Generators sein, da größere oder mehr Kühlvorrichtungen, beispielsweise Ventilatoren, erforderlich werden können, die einen Luftstrom mit der erforderlichen Kühlleistung bereitstellen können. Die weltweit steigende Durchschnittstemperatur verstärkt den Bedarf nach zusätzlicher Kühlleistung.

Zur Kühlung von Generatoren ist es bekannt, die zur Kühlung des Generators abzuführende erwärmte Kühlungsluft an der Außenumfangsfläche in Radialrichtung über einen ringförmigen Spalt aus dem Generator abzuführen. Ferner ist es bekannt, einem Generator Kühlungsluft in Axialrichtung zuzuführen, diese in Axialrichtung durch eine Rotor- und Statoraktiveinheit eines Generators hindurchzuführen und anschließend in Axialrichtung aus dem Generator hinauszuführen. Dies ist beispielsweise aus US 2007/0222223 A1, US 10,495,068 B2, EP 3 270 491 A1, EP 2 182 618 A1 oder DE 10 2014 208 791 A1 bekannt.

Diese bekannten Lösungen haben den Vorteil, dass sie vergleichsweise platzsparend sind und durch wenige/keine Umlenkungen, d.h. mit geringem Widerstand und vergleichsweise geringer Schallemission, die Kühlungsluft innerhalb des Generators führen. Ferner kann eine entsprechend offene Bauweise des Generators einen Bedarf an zusätzlichen Kühlungssystemen vermeiden.

Allerdings ermöglicht diese Bauweise nicht, den erzeugten Schall adäquat zu dämpfen. Insbesondere lässt sich bei diesen Generatoren deren Schallemission nicht in Abhängigkeit der am Betriebsstandort des Generators geltenden Schallemissionsgrenzwerte anpassen. Nachteilig wirkt sich bei den bekannten Lösungen ferner aus, dass Wasser und Schmutz vergleichsweise einfach in den Generatorinnenraum gelangen. In der Folge können bei diesen Generatoren dann Wartungs- und Instandhaltungsarbeiten in kurzen Intervallen erforderlich werden. Es besteht somit die Gefahr, dass der Betrieb solcher Generatoren vergleichsweise teuer werden kann.

Es ist daher eine Aufgabe, einen Generator, insbesondere einen Generator für eine Windenergieanlage, und eine Windenergieanlage bereitzustellen, die eine einfache und kostengünstige Kühlung des Generators unter Einhaltung von Schallemissionsgrenzwerten, insbesondere unter Einhaltung von Schallemissionsgrenzwerten in Abhängigkeit des Betriebsstandorts des Generators respektive der Windenergieanlage, ermöglicht.

Gemäß einem ersten Aspekt wird diese Aufgabe gelöst durch einen Generator nach Anspruch 1.

Der Generator ist insbesondere ein Generator für eine Windenergieanlage. Vorzugsweise ist der Generator als Außenläufer ausgebildet. Der Generator ist insbesondere ein elektrischer Generator. Insbesondere weist der Generator einen Rotor und einen Stator auf, wobei der Rotor relativ zu dem Stator um eine Drehachse drehbar gelagert ist. Vorzugsweise ist der Stator innerhalb des Rotors angeordnet. Es kann auch bevorzugt sein, dass der Rotor innerhalb des Stators angeordnet ist.

Vorzugsweise erstreckt sich der Generator in Axialrichtung mit einer Generatorbreite. Die Axialrichtung entspricht dabei vorzugsweise der Richtung entlang der Drehachse des Generators. Orthogonal zu der Axialrichtung in Radialrichtung erstreckt sich der Generator bevorzugt mit einem Generatordurchmesser.

Der Generator weist einen Luftzuführkanal und eine Abluftkammer, insbesondere zwei oder mehrere Abluftkammern, auf, die mit dem stromaufwärtsliegenden Luftzuführkanal strömungstechnisch verbunden ist. Insbesondere sind der Luftzuführkanal und die Abluftkammer innerhalb des Generatorgehäuses, im Generatorinnenraum angeordnet. Vorzugsweise weist der Generator mehrere Luftzuführkanäle und/oder mehrere Abluftkammern auf. Insbesondere kann es bevorzugt sein, dass jeweils ein Luftzuführkanal mit einer Abluftkammer strömungstechnisch verbunden ist. Vorzugsweise sind mehrere Luftzuführkanäle in Umfangsrichtung des Generators äquidistant zueinander angeordnet. Ferner ist bevorzugt, dass die Abluftkammern in Umfangsrichtung des Generators äquidistant zueinander angeordnet sind.

Insbesondere ist der Luftzuführkanal ausgebildet, zur Kühlung des Generators Umgebungsluft als Kühlungsluft aus der Umgebung des Generators zuzuführen. Ferner ist die Abluftkammer in bevorzugter Weise ausgebildet, zur Kühlung des Generators die vom Generator "erwärmte" Kühlungsluft in Richtung der Umgebung des Generators abzuführen. Der Luftzuführkanal ermöglicht eine Zuführung der Kühlungsluft räumlich getrennt von der erwärmten Kühlungsluft, die in der Abluftkammer abgeführt wird. Ferner ist bevorzugt, dass der Luftzuführkanal und die Abluftkammer thermisch voneinander entkoppelt sind.

Ferner weist der Generator einen Stator mit einer Statoraktiveinheit und einen um eine Drehachse relativ zu dem Stator drehbar angeordneten Rotor mit einer Rotoraktiveinheit auf. Die Rotoraktiveinheit und Statoraktiveinheit sind mit einem Luftspalt beabstandet zueinander angeordnet, durch den die Abluftkammer mit dem stromaufwärtsliegenden Luftzuführkanal strömungstechnisch verbunden ist. Der Luftspalt erstreckt sich vorzugsweise im Wesentlichen in Axialrichtung über eine Breite, insbesondere einer Breite der Rotor- und Statoraktiveinheit. Ferner ist der Luftspalt bevorzugt ringförmig ausgebildet. Insbesondere entspricht der Luftspalt in Radialrichtung dem Abstand zwischen der Rotor- und Statoraktiveinheit.

Ferner weist der Generator eine Luftfördervorrichtung auf, die stromabwärts der Abluftkammer angeordnet ist, die zur Kühlung der Rotoraktiveinheit und der Statoraktiveinheit ausgebildet ist, wobei die Luftfördervorrichtung zur Kühlung der Rotoraktiveinheit und der Statoraktiveinheit Kühlungsluft durch den Luftzuführkanal zu dem Luftspalt zuführt, und von der Rotoraktiveinheit und der Statoraktiveinheit erwärmte Kühlungsluft durch die Abluftkammer von dem Luftspalt abführt, wobei die Abluftkammer ausgebildet ist, die erwärmte Kühlungsluft in Bezug zu der Drehachse im Wesentlichen in einer Radialrichtung abzuführen.

Insbesondere ist bevorzugt, dass die Abluftkammer erwärmte Kühlungsluft in Radialrichtung von der Rotor- und Statoraktiveinheit, insbesondere dem Luftspalt, in Richtung der Drehachse des Generators fördert. Ferner ist bevorzugt, dass der Luftzuführkanal Kühlungsluft in Radialrichtung von der Drehachse des Generators in Richtung der Rotor- und Statoraktiveinheit, insbesondere dem Luftspalt, fördert.

Vorzugsweise weist der Generator mehrere Luftfördervorrichtungen auf. Insbesondere sind die Luftfördervorrichtungen in Umfangsrichtung äquidistant zueinander angeordnet. Die Luftfördervorrichtung ist beispielsweise ein Ventilator.

Ein solcher Generator ermöglicht eine einfache und kostengünstige Führung der Kühlungsluft innerhalb des Generators. Ferner ist der Generator in bevorzugter Weise im Bereich der Umlenkungen der Kühlungsluft an der Stator- und Rotoraktiveinheit gekapselt. Dies hat den Effekt, dass weniger Schall emittiert wird.

Nach einer bevorzugten Ausführungsform des Generators ist vorgesehen, dass der Luftzuführkanal ausgebildet ist, die Kühlungsluft in Bezug zu der Drehachse im Wesentlichen in der Radialrichtung zuzuführen. Vorzugsweise weist der Luftzuführkanal im Wesentlichen eine Haupterstreckungsrichtung in Radialrichtung auf. Ferner kann bevorzugt sein, dass der Generator mehrere Luftzuführkanäle aufweist. Insbesondere kann bevorzugt sein, dass die mehreren Luftzuführkanäle äquidistant zueinander angeordnet sind. Ferner kann bevorzugt sein, dass zwei oder mehr Luftzuführkanäle in Axialrichtung beabstandet zueinander angeordnet sind.

Bei einer bevorzugten Fortbildung des Generators ist vorgesehen, dass der Stator und/oder der Rotor zumindest abschnittsweise den Luftzuführkanal bilden, wobei vorzugsweise der Luftzuführkanal ausgebildet ist zwischen: einer Statortragstruktur des Stators und einer Rotortragstruktur des Rotors, und/oder einem Stator-Verkleidungselement des Stators und der Statortragstruktur des Stators, und/oder einem Rotor-Leeverkleidungselement des Rotors und der Statortragstruktur des Stators, und/oder der Stator und/oder der Rotor zumindest abschnittsweise die Abluftkammer bilden, wobei vorzugsweise die Abluftkammer innerhalb des Stators ausgebildet ist.

Der Generator weist ein Generatorgehäuse mit einer Innenseite und einer der Innenseite gegenüberliegenden Außenseite auf.

Die Innenseite ist einem Generatorinnenraum des Generators zugewandt und die Außenseite ist einer Umgebung des Generators zugewandt.

Das Generatorgehäuse umschließt in bevorzugter Weise einen Generatorinnenraum. Insbesondere grenzt das Generatorgehäuse den sich innerhalb des Generatorgehäuses erstreckenden Generatorinnenraum von der sich außerhalb des Generatorgehäuses befindenden Umgebung räumlich ab. Insbesondere können die Luftzuführkanäle an der Innenseite des Generatorgehäuses ausgebildet sein.

Der Generator weist mindestens einen Luftauslasskanal auf, der sich zwischen der Innenseite und der Außenseite erstreckt, wobei der mindestens eine Luftauslasskanal die Abluftkammer strömungstechnisch mit der Umgebung verbindet. Vorzugsweise weist der Generator mehrere Luftauslasskanäle auf. Insbesondere sind die mehreren Luftauslasskanäle in Umfangsrichtung des Generators äquidistant angeordnet.

Der mindestens eine Luftauslasskanal ist als Durchgangsöffnung ausgebildet. Der mindestens eine Luftauslasskanal kann beispielsweise rohrförmig oder schlauchförmig ausgebildet sein. Ferner kann der mindestens eine Luftauslasskanal als Leitung ausgebildet sein. Hierzu erstreckt sich der mindestens eine Luftauslasskanal in bevorzugter Weise durch das Generatorgehäuse hindurch. Vorzugsweise erstreckt sich der der mindestens eine Luftauslasskanal im Wesentlichen in Axialrichtung.

Durch den mindestens einen Luftauslasskanal lässt sich die Kühlungsluft aus dem Generator gezielt abführen. Insbesondere ermöglicht der mindestens eine Luftauslasskanal eine gezielte Führung der Kühlungsluft innerhalb des Generators.

Der Generator weist mindestens einen Lufteinlasskanal auf, der sich zwischen der Innenseite und der Außenseite erstreckt, wobei der mindestens eine Lufteinlasskanal den Generatorinnenraum strömungstechnisch mit der Umgebung verbindet. Vorzugsweise weist der Generator mehrere Lufteinlasskanäle auf. Insbesondere sind die mehreren Lufteinlasskanäle in Umfangsrichtung des Generators äquidistant angeordnet.

Der mindestens eine Lufteinlasskanal ist als Durchgangsöffnung ausgebildet. Der mindestens eine Lufteinlasskanal kann beispielsweise rohrförmig oder schlauchförmig ausgebildet sein. Ferner kann der mindestens eine Lufteinlasskanal als Leitung ausgebildet sein. Hierzu erstreckt sich der mindestens eine Lufteinlasskanal in bevorzugter Weise durch das Generatorgehäuse hindurch. Vorzugsweise erstreckt sich der der mindestens eine Luftauslasskanal im Wesentlichen in Axialrichtung.

Durch den mindestens einen Lufteinlasskanal lässt sich die Kühlungsluft gezielt in den Generator führen. Insbesondere ermöglicht der mindestens eine Lufteinlasskanal eine gezielte Führung der Kühlungsluft innerhalb des Generators.

Insbesondere strömt im Betrieb des Generators als Kühlungsluft Luft aus der Umgebung durch den mindestens einen Lufteinlasskanal. Es kann bevorzugt sein, an dem mindestens einen Lufteinlasskanal einen Tropfenabscheider vorzusehen, um Feuchtigkeit, insbesondere Wassertropfen, von der in den Generator einströmenden Luft abzuscheiden. Ergänzend oder alternativ kann an dem mindestens einen Lufteinlasskanal ein Luftfilter angeordnet werden, der die in den Generator einströmende Luft von Partikeln reinigt. Der Luftfilter kann Grobfilter und/oder Feinfilter umfassen. Dies erhöht in besonders vorteilhafter Weise die Lebensdauer des Generators bzw. der Windenergieanlage.

Nach einer bevorzugten Ausführungsform weist der Generator zwei Stirnseiten auf, zwischen denen sich der Generatorinnenraum des Generators in einer Axialrichtung erstreckt, wobei der mindestens eine Luftauslasskanal an einer Stirnseite des Generatorsegments angeordnet ist, und/oder der mindestens eine Lufteinlasskanal an einer der beiden Stirnseiten des Generators angeordnet ist. Insbesondere ist bevorzugt, dass das Generatorgehäuse die zwei Stirnseiten aufweist. Insbesondere ist bevorzugt, dass eine der beiden oder beide Stirnseiten einteilig oder mehrteilig ausgebildet ist oder sind.

Weiterhin ist nach einer bevorzugten Ausführungsform des Generators vorgesehen, dass der mindestens eine Luftauslasskanal an der Stirnseite des Generatorsegments angeordnet ist, die in dem Betriebszustand des Generators die vom Wind abgewandte Stirnseite ist. Insbesondere ist bei einer als Luvläufer ausgebildeten Windenergieanlage der mindestens eine Luftauslasskanal an der Stirnseite des Generators angeordnet, die in dem Betriebszustand des Generators die von den Rotorblättern abgewandte Stirnseite ist. Ergänzend oder alternativ ist in dieser bevorzugten Ausführungsform des Generators vorgesehen, dass der mindestens eine Lufteinlasskanal an der Stirnseite des Generators angeordnet ist, die in einem Betriebszustand des Generators die vom Wind abgewandte Stirnseite ist. Insbesondere ist bei einer als Luvläufer ausgebildeten Windenergieanlage der mindestens eine Lufteinlasskanal an der Stirnseite des Generators angeordnet, die in dem Betriebszustand des Generators die von den Rotorblättern abgewandte Stirnseite ist. Vorzugsweise ist im Betriebszustand bei einer als Luvläufer ausgebildeten Windenergieanlage die vom Wind abgewandte Stirnseite die von den Rotorblättern abgewandte Stirnseite des Generators.

Alternativ ist bei einer als Leeläufer ausgebildeten Windenergieanlage der mindestens eine Luftauslasskanal und/oder der mindestens eine Lufteinlasskanal vorzugsweise an der Stirnseite des Generators angeordnet, die in dem Betriebszustand des Generators die von den Rotorblättern zugewandte Stirnseite ist. Vorzugsweise ist im Betriebszustand bei einer als Leeläufer ausgebildeten Windenergieanlage die vom Wind abgewandte Stirnseite die von den Rotorblättern zugewandte Stirnseite des Generators.

Ferner ist in einer weiteren bevorzugten Fortbildung vorgesehen, dass der Generator, vorzugsweise der Stator, eine Druckraumkammer aufweist, wobei vorzugsweise die Druckraumkammer zwischen dem mindestens einen Luftauslasskanal und der Abluftkammer angeordnet ist und den mindestens einen Luftauslasskanal mit der Abluftkammer strömungstechnisch verbindet. Insbesondere ist die Druckraumkammer ausgebildet, die erwärmte Kühlungsluft auf den mindestens einen Luftauslasskanal aufzuteilen. Insbesondere bei Generatoren mit mehreren Luftauslasskanälen ist die Druckraumkammer ausgebildet, die erwärmte Kühlungsluft auf die Luftauslasskanäle gleichmäßig aufzuteilen.

Nach einer weiteren bevorzugten Ausführungsform des Generators ist die Luftfördervorrichtung zwischen der Abluftkammer und der Druckraumkammer angeordnet, wobei die Abluftkammer mit der Druckraumkammer durch die Luftfördervorrichtung strömungstechnisch verbunden ist, wobei vorzugsweise die Luftfördervorrichtung innerhalb des Stators, insbesondere innerhalb der Statortragstruktur, angeordnet ist, wobei besonders bevorzugt die Luftfördervorrichtung einen Ventilator umfasst.

Der Luftzuführkanal ist strömungstechnisch mit dem mindestens einen Lufteinlasskanal verbunden.

Gemäß einer ferner bevorzugten Fortbildung des Generators ist mindestens ein Schalldämpfer an dem Generator angeordnet, wobei vorzugsweise der mindestens eine Schalldämpfer an dem Generator lösbar angeordnet ist.

Insbesondere kann eine Anordnung des mindestens einen Schalldämpfers an dem mindestens einen Luftauslasskanal eine Anordnung innerhalb des Luftauslasskanals umfassen. Es kann bevorzugt sein, dass der Schalldämpfer sich teilweise innerhalb des Luftauslasskanals erstreckt. Insbesondere kann bevorzugt sein, dass der Schalldämpfer sich vollständig durch den Luftauslasskanal erstreckt.

Die lösbare Anordnung des mindestens einen Schalldämpfers an dem Generator kann durch eine formschlüssige und/oder kraftschlüssige und/oder stoffschlüssige Verbindung realisiert werden. Als formschlüssige Verbindung kann beispielsweise eine Dreh- und/oder Schnappverbindung in Betracht kommen. Eine kraftschlüssige Verbindung kann beispielsweise durch eine Schraubverbindung realisiert sein. Eine Klebeverbindung kann beispielsweise als stoffschlüssige Verbindung vorgesehen sein.

Die lösbare Anordnung des mindestens einen Schalldämpfers an dem Generator hat den Vorteil, dass der mindestens eine Schalldämpfer besonders einfach und schnell gewechselt werden kann. Insbesondere hat dies den Vorteil, dass der Generator bzw. die Windenergieanlage aufweisend einen solchen Generator besonders einfach und schnell mit Schalldämpfern ausgestattet werden können, die den (standortabhängigen) Emissionsgrenzwerten am Standort des Betriebs genügen. Insbesondere lassen sich solche Generatoren bzw. die Windenergieanlagen ohne großen Aufwand mit Schalldämpfern nachrüsten, die auch zukünftigen Emissionsrichtlinien mit strengeren Grenzwerten genügen können.

Nach einer ferner bevorzugten Ausführungsform des Generators ist vorgesehen, dass der mindestens eine Schalldämpfer an dem mindestens einen Luftauslasskanal angeordnet ist, wobei vorzugsweise der mindestens eine Schalldämpfer sich durch den mindestens einen Luftauslasskanal hindurch erstreckt und/oder der mindestens eine Schalldämpfer sich über die Außenseite hinaus erstreckt, wobei insbesondere der mindestens eine Schalldämpfer einen Rohrschalldämpfer und/oder einen Kulissenschalldämpfer und/oder schalldämpfende Elemente aufweist.

Der mindestens eine Schalldämpfer, der sich über die Außenseite hinaus erstreckt, erstreckt sich insbesondere in die Umgebung des Generators hinein. Ferner kann bevorzugt sein, dass der mindestens eine Schalldämpfer sich über die Innenseite hinaus erstreckt. Der mindestens eine Schalldämpfer, der sich über die Innenseite hinaus erstreckt, erstreckt sich insbesondere in den Generatorinnenraum des Generators hinein.

Diese bevorzugte Ausführungsform ermöglicht, den mindestens einen Schalldämpfer in Abhängigkeit der am Standort des Generators bzw. der Windenergieanlage geltenden Emissionsgrenzwerte hinsichtlich seiner Dämpfungseigenschaften "einzustellen". Ist eine vergleichsweise hohe Schalldämpfung erforderlich, kann ein längerer Schalldämpfer vorgesehen werden; reicht hingegen eine vergleichsweise geringe Schalldämpfung aus, kann ein kürzerer Schalldämpfer vorgesehen werden. Insbesondere lassen sich solche Generatoren und entsprechende Windenergieanlagen mit entsprechenden Schalldämpfern nachrüsten, die zukünftig strengeren Schallemissionsgrenzwerten genügen.

Weiterhin ist nach einer bevorzugten Fortbildung vorgesehen, dass der Generator eine Absperreinheit aufweist, wobei vorzugsweise die Absperreinheit zwischen einer Offenstellung und einer von der Offenstellung verschiedenen Sperrstellung veränderbar ist, wobei insbesondere die Absperreinheit eine Jalousieklappe oder Rohrklappe ist.

Eine solche Absperreinheit kann einteilig oder mehrteilig ausgebildet sein. Ferner kann bevorzugt sein, dass die Absperreinheit eine mechanisch betätigte Absperreinheit und/oder eine motorisch betätigte Absperreinheit ist.

Die Absperreinheit hat den Effekt, dass Umwelteinflüsse aus der Umgebung, beispielsweise Regenwasser, Staub etc. im Betriebsruhestand des Generators bzw. der Windenergieanlage nicht in den Generatorinnenraum gelangen. Insofern hat die Absperreinheit den Vorteil, dass der Generator bzw. die Windenergieanlage weniger verschmutzen und die Wahrscheinlichkeit für einen Ausfall des Generators bzw. der Windenergieanlage sinkt.

Ferner hat diese Ausführungsform den Vorteil, dass die Wartung und die Instandhaltung im Vergleich zu Generatoren ohne solch eine Absperreinheit in größeren Intervallen erfolgen kann. Hierdurch können die Betriebskosten solcher Generatoren sinken.

Insbesondere kann die Absperreinheit ausgebildet sein, dass diese sich während des Betriebs des Generators in der Offenstellung befindet. Die Absperreinheit kann mechanisch oder motorisch betätigt in der Offenstellung positioniert werden.

Bei einer mechanisch betätigten Absperreinheit kann beispielsweise die erwärmte Kühlungsluft, die aus dem Generator hinausströmt, die Absperreinheit in der Offenstellung positionieren. Strömt hingegen die erwärmte Kühlungsluft nicht mehr aus dem Generatorinnenraum in die Umgebung des Generators hinaus, wird die Absperreinheit in der Sperrstellung positioniert. Ferner kann bevorzugt sein, dass die Absperreinheit während des Betriebs des Generators durch einen Antrieb in der Offenstellung positioniert wird und der Antrieb die Absperreinheit in der Sperrstellung positioniert, wenn der Generator nicht mehr gekühlt wird.

Dies hat den Vorteil, dass der Luftwiederstand durch die Absperreinheit in der Offenstellung im Betrieb gering ist und der Generator bzw. der Generatorinnenraum im Betriebsruhestand durch die Absperreinheit in der Sperrstellung vor Umwelteinflüssen geschützt ist.

Dies hat den Vorteil, dass Standardbauteile als Absperreinheit eingesetzt werden können. Dies hat den Vorteil, dass derart ausgebildete Absperreinheiten gut verfügbar sind und somit auch kurzfristig beschafft werden können.

Ferner ist gemäß einer weiteren bevorzugten Ausführungsform vorgesehen, dass der mindestens eine Luftauslasskanal zylinderförmig oder polygonal ausgebildet ist. Insbesondere ist der mindestens eine Luftauslasskanal zylinderförmig ausgebildet, wenn als Schalldämpfer Rohrschalldämpfer vorgesehen sind. Ferner ist bevorzugt, dass der mindestens eine Luftauslasskanal polygonal ausgebildet ist, wenn als Schalldämpfer Kulissenschalldämpfer vorgesehen sind.

Darüber hinaus wird die eingangs genannte Aufgabe gelöst durch eine Windenergieanlage, umfassend einen Generator wie vorstehend beschrieben.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Generators verwiesen.

Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2:: eine Draufsicht einer bevorzugten Ausführungsform eines Generators;
- Figur 3:: eine Seitenansicht des in Figur 2 dargestellten Generators in der Draufsicht;
- Figur 4:: eine Schnittansicht des in Figur 3 dargestellten Generators in der Seitenansicht;
- Figur 5:: eine Detailansicht der in Figur 4 dargestellten Generators in der Schnittansicht; und
- Figur 6:: eine Schnittansicht einer weiteren bevorzugten Ausführungsform eines Generators.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

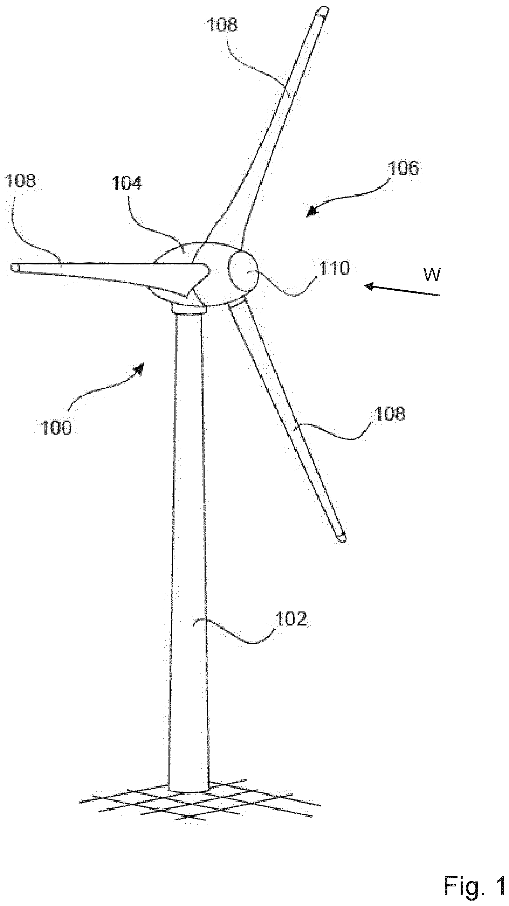

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass der Generator im Detail nicht erkennbar ist.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind W in eine Drehbewegung versetzt und dreht somit auch einen elektrodynamischen Rotor oder Läufer eines Generators 10, welcher direkt oder indirekt mit dem aerodynamischen Rotor 106 gekoppelt ist. Der Generator 10 ist in der Gondel 104 angeordnet und erzeugt elektrische Energie.

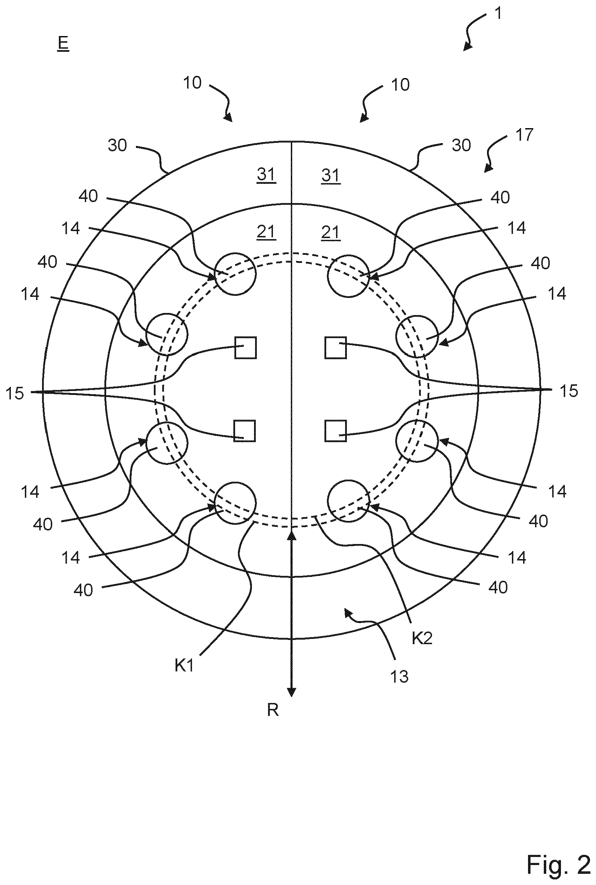

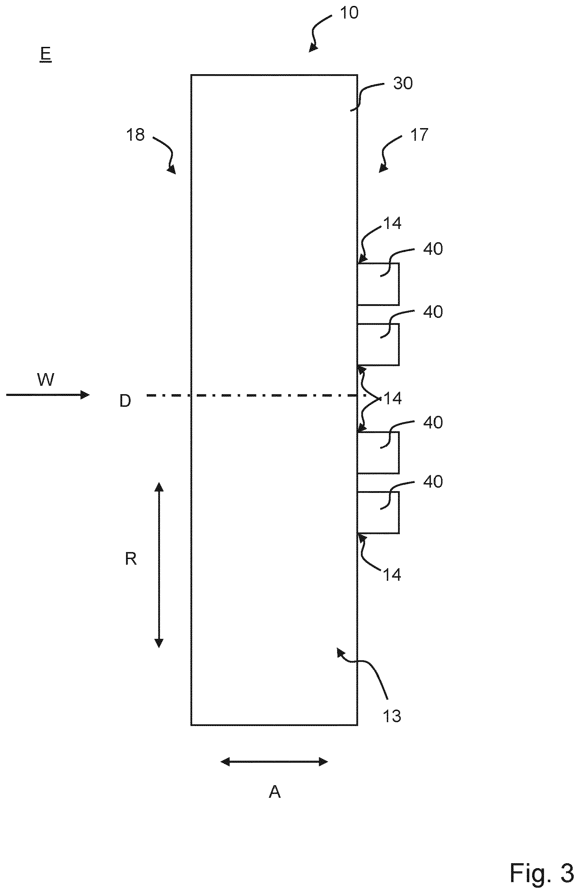

Figuren 2 und 3 zeigen eine bevorzugte Ausführungsform eines Generators 10 für eine solche Windenergieanlage 100 zur elektrischen Energieerzeugung. Figur 2 zeigt den Generator 10 in einer Draufsicht und Figur 3 zeigt den Generator 10 in einer Seitenansicht. Der Generator 10 ist in dieser bevorzugten Ausführungsform als Außenläufer ausgebildet.

Der Generator 10 weist ein Generatorgehäuse mit einer Außenseite 13 auf, die einer Umgebung E des Generators 10 zugewandt ist. Ferner weist der Generator 10 eine Innenseite 12 (in Figuren 2 und 3 nicht dargestellt) auf, die einem Generatorinnenraum 16 (in Figuren 2 und 3 nicht dargestellt) zugewandt ist und der Außenseite 13 gegenüberliegt. Der Generatorinnenraum 16 ist in Axialrichtung A durch zwei Stirnseiten 17, 18, einer im Betriebszustand vom Wind W abgewandten Stirnseite (windabgewandte Stirnseite) und einer im Betriebszustand dem Wind W zugewandten Stirnseite 18 (windzugewandte Stirnseite), räumlich begrenzt. In der vorliegenden Ausführungsform bilden beispielsweise ein Rotor-Leeverkleidungselement 31 und ein Stator-Verkleidungselement 21 die windabgewandte Stirnseite 17 und ein Rotor-Luvverkleidungselement 32 die windzugewandte Stirnseite 18. Die beiden Stirnseiten 17, 18 weisen jeweils eine Innenseite 12 und eine Außenseite 13 auf.

Der Generator 10 weist acht Luftauslasskanäle 14 und vier Lufteinlasskanäle 15 auf, die sich zwischen der Innenseite 12 und der Außenseite 13 erstrecken und den Generatorinnenraum 16 strömungstechnisch mit der Umgebung E verbinden. Dabei sind die Lufteinlasskanäle ausgebildet, dass Luft aus der Umgebung E in den Generatorinnenraum 16 gelangt. Die Luftauslasskanäle sind ausgebildet, dass Luft aus dem Generatorinnenraum 16 in die Umgebung E gelangt. Es ist zu erkennen, dass die in Figur 2 dargestellten zwei linken und zwei rechten Luftauslasskanäle auf einer Kreisbahn K1 und die zwei oberen und zwei unteren Luftauslasskanäle auf einer Kreisbahn K2, die von der Kreisbahn K1 verschieden ist, angeordnet sind.

Die Luftauslasskanäle 14 sind in der vorliegenden bevorzugten Ausführungsform zylinderförmig ausgebildet. Die Lufteinlasskanäle 15 sind in der vorliegenden bevorzugten Ausführungsform polygonal ausgebildet. Sowohl die Luftauslasskanäle 14 als auch die Lufteinlasskanäle 15 erstrecken sich im Wesentlichen in Axialrichtung A. Sowohl die Luftauslasskanäle 14 als auch die Lufteinlasskanäle 15 sind in dieser bevorzugten Ausführungsform des Generators an derselben Stirnseite angeordnet; hier an der windabgewandten Stirnseite 17 in dem Stator-Verkleidungselement 21 ausgebildet. Das heißt, die Luftauslasskanäle 14 und die Lufteinlasskanäle 15 sind an der Stirnseite 17 des Generator 10 angeordnet, die in dem Betriebszustand des Generators 10 die vom Wind W abgewandte Stirnseite 17 ist; sprich, die Luftauslasskanäle 14 und die Lufteinlasskanäle 15 befinden sich im Betriebszustand des Generators 10 an jener Stirnseite 10, die der Gondel 104 bzw. dem Maschinenhaus zugewandt ist.

An dem Generator 10 sind acht Schalldämpfer 40 lösbar angeordnet. Konkret ist je ein Schalldämpfer 40 an jeweils einem Luftauslasskanal 14 angeordnet. Die Schalldämpfer 40 sind an den Luftauslasskanälen 14 derart angeordnet, dass diese sich durch den jeweiligen Luftauslasskanal 14 hindurch erstrecken. Die Schalldämpfer 40 weisen in Axialrichtung A eine Länge auf, die es erfordert, dass die Schalldämpfer 40 sich über die Außenseite 13 hinaus, d.h. in die Umgebung E hinein, erstrecken. In der bevorzugten Ausführungsform sind die Schalldämpfer 40 als Rohrschalldämpfer ausgebildet. Es kann allerdings auch bevorzugt sein, Kulissenschalldämpfer als Schalldämpfer 40 vorzusehen. Ergänzend oder alternativ können an den Luftauslässen 14 auch schalldämpfende Elemente 40 angeordnet werden.

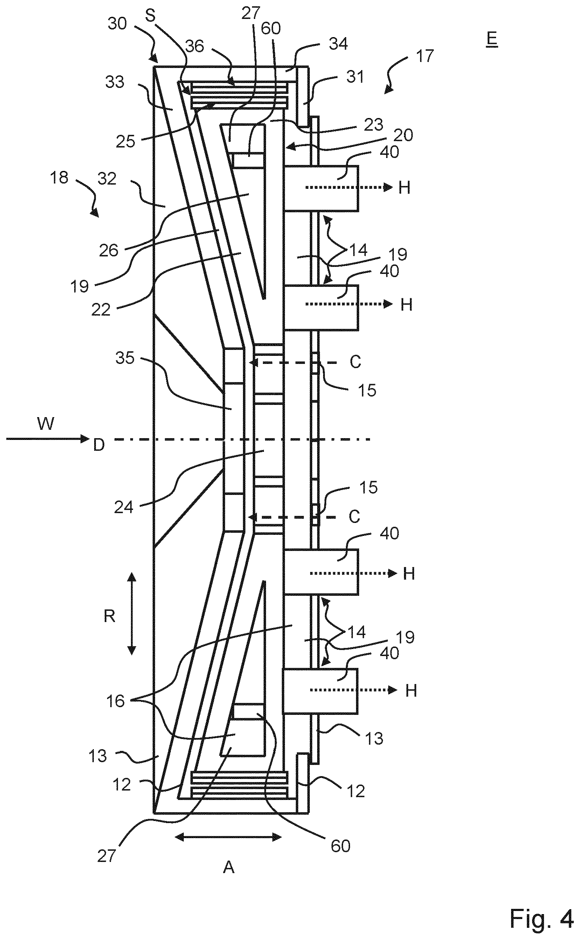

Figur 4 zeigt eine Schnittansicht des in den Figuren 2 und 3 dargestellten Generators 10. Diese Schnittansicht zeigt den Generatorinnenraum 16 des Generators 10 im Detail. Es ist zu erkennen, dass der Rotor 30 eine Rotoraktiveinheit 36 an einem Magnetträgersegment 34 aufweist, das über eine Rotortragstruktur 33 drehbar um eine Drehachse D gehalten wird. Ferner ist zu erkennen, dass der Stator 20 eine Statoraktiveinheit 25 an einem Spulenträgersegment 23 aufweist, das über eine Statortragstruktur 22 koaxial zu der Drehachse D angeordnet ist. Der Rotor 30 ist um die Drehachse D relativ zu dem Stator 20 drehbar angeordnet.

Rotor 30 und Stator 20 sind derart zueinander positioniert, dass die Rotoraktiveinheit 36 und die Statoraktiveinheit 25 mit einem Luftspalt S beanstandet zueinander angeordnet sind. Zur Kühlung des Generators 10 wird durch den Luftspalt S Kühlungsluft C hindurchgeführt wird. Dazu wird im Betrieb Kühlungsluft C durch einen Luftzuführkanal 19 zu dem Luftspalt S geführt, der mit den Lufteinlasskanälen 15 strömungstechnisch verbunden ist. Der Luftzuführkanal 19 ist dabei derart ausgebildet, dass die Kühlungsluft C in Bezug zu der Drehachse D im Wesentlichen in der Radialrichtung R nach außen in Richtung des Magnetträgersegments 34 geführt wird. Den Luftzuführkanal 19 bilden dabei der Rotor und der zum Rotor beabstandet angeordnete Stator. Insbesondere bilden den Luftzuführkanal 19 vorliegend einerseits die Rotortragstruktur 33 mit dem Rotor-Luvverkleidungselement 32 und die Statortragstruktur 22 und andererseits das Stator-Verkleidungselement 21 bzw. das Rotor-Leeverkleidungselement 31 und die Statortragstruktur 22.

Die von der Rotoraktiveinheit 36 und der Statoraktiveinheit 25 erwärmte Kühlungsluft H wird wiederum durch Abluftkammern 27 von dem Luftspalt S, der die Abluftkammern 27 mit dem stromaufwärtsliegenden Luftzuführkanal 19 strömungstechnisch verbindet, in Radialrichtung R nach innen abgeführt. Hierzu sind die Abluftkammern innerhalb des Stators 20 bzw. innerhalb der Statortragstruktur 22 des Stators 20 angeordnet. Die Abluftkammern 27 sind also ausgebildet, die erwärmte Kühlungsluft H in Bezug zu der Drehachse D im Wesentlichen in einer Radialrichtung R abzuführen.

Zur Förderung der Kühlungsluft C bzw. der erwärmten Kühlungsluft H durch den Generatorinnenraum 16 weist der Generator mehrere Luftfördervorrichtungen 60, beispielsweise Ventilatoren, auf, die durch eine Druckraumkammer 26 mit den Luftauslasskanälen 14 strömungstechnisch verbunden sind. Die Druckraumkammer 26 ist also zwischen den Luftauslasskanälen 14 und den Abluftkammern 27 bzw. den Luftfördervorrichtungen 60 angeordnet und verbindet die Abluftkammern 27 über die Luftfördervorrichtungen 60 strömungstechnisch mit den Luftauslasskanälen 14. Dazu sind die Luftfördervorrichtungen 60 stromabwärts der Abluftkammern 27 angeordnet.

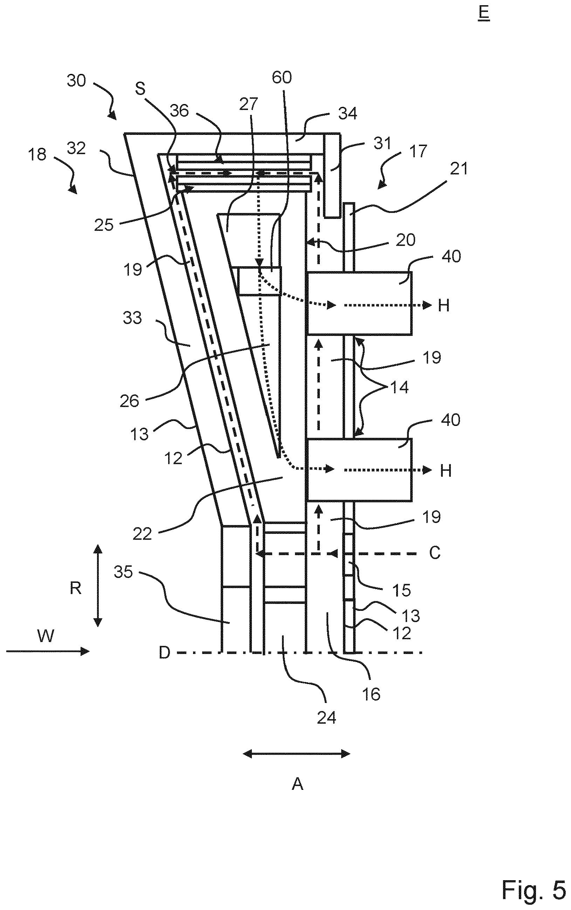

Figur 5 zeigt eine Detailansicht der in Figur 4 dargestellten Schnittansicht. Aus der Detailansicht von Figur 5 wird die Führung der Kühlungsluft C (gestrichelte Linie) und der erwärmten Kühlungsluft H (gepunktete Linie) deutlich. Es ist zu sehen, dass die Kühlungsluft C durch die Lufteinlasskanäle 15 in den Generatorinnenraum 16 eintritt und über die Luftzuführkanäle dem Luftspalt S zwischen den Aktiveinheiten 25, 36 zugeführt wird. Die stromabwärts des Luftspalts S innerhalb der Statortragstruktur 22 angeordneten Luftfördervorrichtung saugen die erwärmte Kühlungsluft H durch Abluftkammern 27 an und fördern die erwärmte Kühlungsluft H durch die Druckraumkammer 26 und durch die in den Luftauslasskanälen 14 angeordneten Schalldämpfer 40 in die Umgebung E.

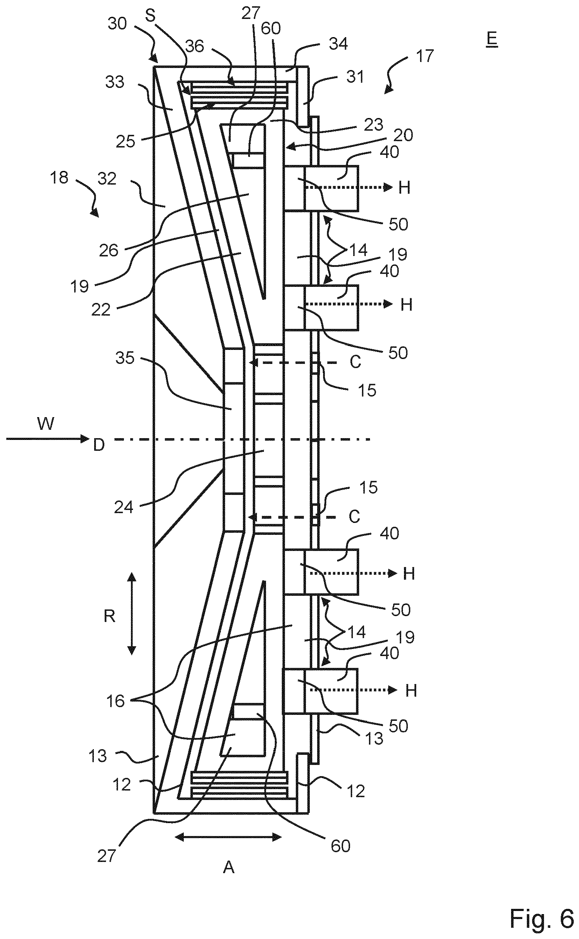

Figur 6 zeigt eine Schnittansicht einer weiteren bevorzugten Ausführungsform eines Generators 10. Diese weitere Ausführungsform beruht im Wesentlichen auf der in den Figuren 2 bis 5 dargestellten bevorzugten Ausführungsform des Generators 10.

Die in Figur 6 gezeigte Ausführungsform weist ferner mehrere Absperreinheiten 50 auf. Es ist hierbei vorgesehen, dass jeweils eine Absperreinheit 50 einem Luftauslasskanal 14 zugeordnet ist. Hierzu sind die Absperreinheiten innerhalb des Generatorinnenraums 16 in Strömungsrichtung vorgelagert zu den Schalldämpfern 40 angeordnet. Die Absperreinheiten 50 sind beispielsweise Jalousieklappen oder Rohrklappen, die zwischen einer Offenstellung und einer von der Offenstellung verschiedenen Sperrstellung veränderbar sind. In der Offenstellung verbinden die Absperreinheiten 50 die Druckraumkammer strömungstechnischen mit den Luftauslasskanälen 14 bzw. den Schalldämpfern 40. In der Sperrstellung verhindern die Absperreinheiten 50, dass Umwelteinflüsse, d.h. Schmutz, Regen oder dergleichen, aus der Umgebung E in den Generatorinnenraum 16 gelangen.

### Bezugszeichenliste

- 10: Generator
- 12: Innenseite
- 13: Außenseite
- 14: Luftauslasskanal
- 15: Lufteinlasskanal
- 16: Generatorinnenraum
- 17: windabgewandte Stirnseite
- 18: windzugewandte Stirnseite
- 19: Luftzuführkanal
- 20: Stator
- 21: Stator-Verkleidungselement
- 22: Statortragstruktur
- 23: Spulenträgersegment
- 25: Statoraktiveinheit bzw. Spuleneinheit
- 26: Druckraumkammer
- 27: Abluftkammer
- 30: Rotor
- 31: Rotor-Leeverkleidungselement
- 32: Rotor-Luvverkleidungselement
- 33: Rotortragstruktur
- 34: Magnetträgersegment
- 36: Rotoraktiveinheit bzw. Magneteinheiten
- 40: Schalldämpfer
- 50: Absperreinheit
- 60: Luftfördervorrichtung
- 100: Windenergieanlage
- 102: Turm
- 104: Gondel
- 106: aerodynamischer Rotor
- 108: Rotorblätter
- 110: Spinner
- A: Axialrichtung
- C: Kühlungsluft
- D: Drehachse
- E: Umgebung
- H: erwärmte Kühlungsluft, Warmluft
- K1,2: Kreisbahnen
- R: Radialrichtung
- S: Luftspalt
- W: Wind(richtung)

## Patentansprüche

1. Generator (10), insbesondere Generator (10) für eine Windenergieanlage (100), der Generator (10) aufweisend:
- ein Generatorgehäuse aufweisend:
∘ eine Innenseite, die einem Generatorinnenraum (16) des Generators (10) zugewandt ist, und
∘ eine der Innenseite (12) gegenüberliegende Außenseite (13), die einer Umgebung (E) des Generators (10) zugewandt ist, und
- mindestens einen Luftauslasskanal (14), der sich zwischen der Innenseite (12) und der Außenseite (13) erstreckt, und/oder
- mindestens einen Lufteinlasskanal (15), der sich zwischen der Innenseite (12) und der Außenseite (13) erstreckt, wobei der mindestens eine Lufteinlasskanal (15) den Generatorinnenraum (16) strömungstechnisch mit der Umgebung (E) verbindet, und
- einen Luftzuführkanal (19) und eine Abluftkammer (27), insbesondere zwei oder mehrere Abluftkammern (27), die mit dem stromaufwärtsliegenden Luftzuführkanal (19) strömungstechnisch verbunden ist, wobei der Luftzuführkanal (19) strömungstechnisch mit dem mindestens einen Lufteinlasskanal (15) verbunden ist und der mindestens eine Luftauslasskanal (14) die Abluftkammer (27) strömungstechnisch mit der Umgebung (E) verbindet,
- einen Stator (20) mit einer Statoraktiveinheit (25) und einen um eine Drehachse (D) relativ zu dem Stator (20) drehbar angeordneten Rotor (30) mit einer Rotoraktiveinheit (36), wobei
- die Rotoraktiveinheit (36) und die Statoraktiveinheit (25) mit einem Luftspalt (S) beabstandet zueinander angeordnet sind, durch den die Abluftkammer (27) mit dem stromaufwärtsliegenden Luftzuführkanal (19) strömungstechnisch verbunden ist,
**dadurch gekennzeichnet, dass**
- eine Luftfördervorrichtung (60) stromabwärts der Abluftkammer (27) angeordnet ist, die zur Kühlung der Rotoraktiveinheit (36) und der Statoraktiveinheit (25) ausgebildet ist, wobei die Luftfördervorrichtung (60) zur Kühlung der Rotoraktiveinheit (36) und der Statoraktiveinheit (25)**,**
∘ Kühlungsluft (C) durch den Luftzuführkanal (19) zu dem Luftspalt (S) zuführt, und
∘ von der Rotoraktiveinheit (36) und der Statoraktiveinheit (25) erwärmte Kühlungsluft (H) durch die Abluftkammer (27) von dem Luftspalt abführt, wobei die Abluftkammer (27) ausgebildet ist, die erwärmte Kühlungsluft (H) in Bezug zu der Drehachse (D) im Wesentlichen in einer Radialrichtung (R) abzuführen.

2. Generator (10) nach dem vorhergehenden Anspruch 1, wobei der Luftzuführkanal (19) ausgebildet ist, die Kühlungsluft (C) in Bezug zu der Drehachse (D) im Wesentlichen in der Radialrichtung (R) zuzuführen.

3. Generator (10) nach einem der vorhergehenden Ansprüche 1 oder 2, wobei
- der Stator (20) und/oder der Rotor (30) zumindest abschnittsweise den Luftzuführkanal (19) bilden,
wobei vorzugsweise der Luftzuführkanal (19) ausgebildet ist zwischen:
∘ einer Statortragstruktur (22) des Stators (20) und einer Rotortragstruktur (33) des Rotors (30), und/oder
∘ einem Stator-Verkleidungselement (21) des Stators (20) und der Statortragstruktur (22) des Stators (20), und/oder
∘ einem Rotor-Leeverkleidungselement (31) des Rotors (30) und der Statortragstruktur (22) des Stators (20), und/oder
- der Stator (20) und/oder der Rotor (30) zumindest abschnittsweise die Abluftkammer (27) bilden,
wobei vorzugsweise die Abluftkammer (27) innerhalb des Stators (20) ausgebildet ist.

4. Generator (10) nach dem vorhergehenden Anspruch 3, aufweisend:
- zwei Stirnseiten (17, 18), zwischen denen sich der Generatorinnenraum (16) des Generators (10) in einer Axialrichtung (A) erstreckt, wobei
• der mindestens eine Luftauslasskanal (14) an einer Stirnseite (17, 18) des Generators (10) angeordnet ist, und/oder
• der mindestens eine Lufteinlasskanal (15) an einer der beiden Stirnseiten des Generators (10) angeordnet ist.

5. Generator (10) nach einem der vorhergehenden Ansprüche 3 oder 4, wobei
- der mindestens eine Luftauslasskanal (14) an der Stirnseite (17, 18) des Generators (10) angeordnet ist, die in einem Betriebszustand des Generators (10) die vom Wind (W) abgewandte Stirnseite (17) ist, und/oder
- der mindestens eine Lufteinlasskanal (15) an der Stirnseite (17, 18) des Generators (10) angeordnet ist, die in einem Betriebszustand des Generators (10) die vom Wind (W) abgewandte Stirnseite (17) ist.

6. Generator (10) nach einem der vorhergehenden Ansprüche 1 bis 5, wobei
der Generator (10), vorzugsweise der Stator (20), eine Druckraumkammer (26) aufweist,
wobei vorzugsweise die Druckraumkammer (26) zwischen dem mindestens einen Luftauslasskanal (14) und der Abluftkammer (27) angeordnet ist und den mindestens einen Luftauslasskanal (14) mit der Abluftkammer (27) strömungstechnisch verbindet.

7. Generator (10) nach dem vorhergehenden Anspruch 6, wobei
die Luftfördervorrichtung (60) zwischen der Abluftkammer (27) und der Druckraumkammer angeordnet ist, wobei die Abluftkammer (27) mit der Druckraumkammer durch die Luftfördervorrichtung (60) strömungstechnisch verbunden ist,
wobei vorzugsweise die Luftfördervorrichtung (60) innerhalb des Stators (20), insbesondere innerhalb der Statortragstruktur (22), angeordnet ist,
wobei besonders bevorzugt die Luftfördervorrichtung (60) einen Ventilator umfasst.

8. Generator (10) nach einem der vorhergehenden Ansprüche 1 bis 7, wobei
mindestens ein Schalldämpfer (40) an dem Generator (10) angeordnet ist,
wobei vorzugsweise der mindestens eine Schalldämpfer (40) an dem Generator (10) lösbar angeordnet ist.

9. Generator (10) nach dem vorhergehenden Anspruch 8, wobei
der mindestens eine Schalldämpfer (40) an dem mindestens einen Luftauslasskanal (14) angeordnet ist,
wobei vorzugsweise der mindestens eine Schalldämpfer (40) sich durch den mindestens einen Luftauslasskanal (14) hindurch erstreckt und/oder der mindestens eine Schalldämpfer (40) sich über die Außenseite (13) hinaus erstreckt,
wobei insbesondere der mindestens eine Schalldämpfer (40) einen Rohrschalldämpfer (40) und/oder einen Kulissenschalldämpfer (40) und/oder schalldämpfende Elemente aufweist.

10. Generator (10) nach einem der vorhergehenden Ansprüche 1 bis 9, aufweisend eine Absperreinheit (50),
wobei vorzugsweise die Absperreinheit (50) zwischen einer Offenstellung und einer von der Offenstellung verschiedenen Sperrstellung veränderbar ist,
wobei insbesondere die Absperreinheit (50) eine Jalousieklappe oder Rohrklappe ist.

11. Generator (10) nach einem der vorhergehenden Ansprüche 1 bis 10, wobei
der mindestens eine Luftauslasskanal (14) zylinderförmig oder polygonal ausgebildet ist.

12. Windenergieanlage, aufweisend einen Generator (10) nach einem der vorhergehenden Ansprüche 1-11.

## Claims

1. A generator (10), in particular a generator (10) for a wind power installation (100), the generator (10) having:
- a generator housing having:
∘ an internal side which faces a generator interior space (16) of the generator (10), and
∘ an external side (13), opposite the internal side (12), which faces an environment (E) of the generator (10), and
- at least one air outlet duct (14) which extends between the internal side (12) and the external side (13), and/or
- at least one air inlet duct (15) which extends between the internal side (12) and the external side (13), the at least one air inlet duct (15) fluidically connecting the generator interior space (16) to the environment (E), and
- an air supply duct (19) and an exhaust air chamber (27), in particular two or a plurality of exhaust air chambers (27), which are fluidically connected to the upstream air supply duct (19), wherein the air supply duct (19) is fluidically connected to the at least one air inlet duct (15) and
- the at least one air outlet duct (14) fluidically connecting the exhaust air chamber (27) to the environment (E),
- a stator (20) having a stator active unit (25) and a rotor (30) which is disposed so as to be rotatable relative to the stator (20) about a rotation axis (D) and has a rotor active unit (36),
- the rotor active unit (36) and the stator active unit (25) being disposed so as to be mutually spaced apart by an air gap (S) by way of which the exhaust air chamber (27) is fluidically connected to the upstream air supply duct (19), **characterised in that**
- an air-conveying device (60) is disposed downstream of the exhaust air chamber (27) that is configured for cooling the rotor active unit (36) and the stator active unit (25), the air-conveying device (60) for cooling the rotor active unit (36) and the stator active unit (25)
∘ supplying cooling air (C) to the air gap (S) by way of the air supply duct (19), and
∘ discharging from the air gap cooling air (H) heated by the rotor active unit (36) and the stator active unit (25) by way of the exhaust air chamber (27), the exhaust air chamber (27) being configured for discharging the heated cooling air (H) substantially in a radial direction (R) in terms of the rotation axis (D).

2. The generator (10) as claimed in the preceding claim 1, wherein the air supply duct (19) is configured for supplying the cooling air (C) substantially in the radial direction (R) in terms of the rotation axis (D).

3. The generator (10) as claimed in either of the preceding claims 1 and 2, wherein
- the stator (20) and/or the rotor (30) at least in portions form the air supply duct (19),
the air supply duct (19) preferably being configured between:
∘ a stator support structure (22) of the stator (20) and a rotor support structure (33) of the rotor (30), and/or
∘ a stator cladding element (21) of the stator (20) and the stator support structure (22) of the stator (20), and/or
∘ a rotor downwind cladding element (31) of the rotor (30) and the stator support structure (22) of the stator (20), and/or
- the stator (20) and/or the rotor (30) at least in portions forming the exhaust air chamber (27),
the exhaust air chamber (27) preferably being configured within the stator (20).

4. The generator (10) as claimed in the preceding claim 3, having:
- two end sides (17, 18), the generator interior space (16) of the generator (10) extending therebetween in an axial direction (A),
• the at least one air outlet duct (14) being disposed on an end side (17, 18) of the generator (10), and/or
• the at least one air inlet duct (15) being disposed on one of the two end sides of the generator (10).

5. The generator (10) as claimed in either of the preceding claims 3 or 4, wherein
- the at least one air outlet duct (14) is disposed on that end side (17, 18) of the generator (10) that in an operating state of the generator (10) is the end side (17) that faces away from the wind (W), and/or
- the at least one air inlet duct (15) is disposed on that end side (17, 18) of the generator (10) that in an operating state of the generator (10) is the end side (17) that faces away from the wind (W).

6. The generator (10) as claimed in one of the preceding claims 1 to 5, wherein
the generator (10), preferably the stator (20), has a pressurized chamber (26),
the pressurized chamber (26) preferably being disposed between the at least one air outlet duct (14) and the exhaust air chamber (27), and fluidically connecting the at least one air outlet duct (14) to the exhaust air chamber (27).

7. The generator (10) as claimed in the preceding claim 6, wherein
the air-conveying device (60) is disposed between the exhaust air chamber (27) and the pressurized chamber, the exhaust air chamber (27) by way of the air-conveying device (60) being fluidically connected to the pressurized chamber,
the air-conveying device (60) preferably being disposed within the stator (20), in particular within the stator support structure (22),
the air-conveying device (60) particularly preferably comprising a ventilator.

8. The generator (10) as claimed in one of the preceding claims 1 to 7, wherein
at least one silencer (40) is disposed on the generator (10),
the at least one silencer (40) preferably being releasably disposed on the generator (10).

9. The generator (10) as claimed in the preceding claim 8, wherein
the at least one silencer (40) is disposed on the at least one air outlet duct (14),
the at least one silencer (40) preferably extending through the at least one air outlet duct (14) and/or the at least one silencer (40) extending beyond the external side (13),
the at least one silencer (40) having in particular a duct silencer (40) and/or a splitter silencer (40) and/or sound-absorbing elements.

10. The generator (10) as claimed in one of the preceding claims 1 to 9, having a shut-off unit (50),
the shut-off unit (50) preferably being variable between an open position and a blocking position different from the open position,
the shut-off unit (50) being in particular a louver blade or a duct flap.

11. The generator (10) as claimed in one of the preceding claims 1 to 10, wherein
the at least one air outlet duct (14) is configured so as to be cylindrical or polygonal.

12. A wind power installation, having a generator (10) as claimed in one of the preceding claims 1-11.

## Revendications

1. Générateur (10), en particulier générateur (10) pour une éolienne (100), le générateur (10) présentant :
- un boîtier de générateur présentant :
∘ une face intérieure, qui est tournée vers un espace intérieur de générateur (16) du générateur (10), et
∘ une face extérieure (13) faisant face à la face intérieure (12), qui est tournée vers un environnement (E) du générateur (10), et
- au moins un conduit de sortie d'air (14), qui s'étend entre la face intérieure (12) et la face extérieure (13), et/ou
- au moins un conduit d'entrée d'air (15), qui s'étend entre la face intérieure (12) et la face extérieure (13), dans lequel l'au moins un conduit d'entrée d'air (15) relie l'espace intérieur de générateur (16) en communication fluidique à l'environnement (E), et
- un conduit d'amenée d'air (19) et une chambre d'évacuation d'air (27), en particulier deux ou plusieurs chambres d'évacuation d'air (27), qui est reliée en communication fluidique au conduit d'amenée d'air (19) en amont, dans lequel le conduit d'amenée d'air (19) est relié en communication fluidique à l'au moins un conduit d'entrée d'air (15) et l'au moins un conduit de sortie d'air (14) relie la chambre d'évacuation d'air (27) en communication fluidique à l'environnement (E),
- un stator (20) avec une unité active de stator (25) et un rotor (30) disposé de manière à pouvoir tourner autour d'un axe de rotation (D) par rapport au stator (20) avec une unité active de rotor (36), dans lequel
- l'unité active de rotor (36) et l'unité active de stator (25) sont disposées de manière espacée l'une de l'autre par un entrefer (S) par lequel la chambre d'évacuation d'air (27) est reliée en communication fluidique au conduit d'amenée d'air (19) en amont,
**caractérisé en ce que**
- un dispositif de transport d'air (60) est disposé en aval de la chambre d'évacuation d'air (27), qui est réalisé pour refroidir l'unité active de rotor (36) et l'unité active de stator (25), dans lequel le dispositif de transport d'air (60) amène pour refroidir l'unité active de rotor (36) et l'unité active de stator (25),
∘ de l'air de refroidissement (C) à travers le conduit d'amenée d'air (19) jusqu'à l'entrefer (5), et
∘ évacue, de l'entrefer, de l'air de refroidissement (H), chauffé par l'unité active de rotor (36) et l'unité active de stator (25), à travers la chambre d'évacuation d'air (27), dans lequel la chambre d'évacuation d'air (27) est réalisée pour évacuer l'air de refroidissement (H) chauffé, par rapport à l'axe de rotation (D), sensiblement dans une direction radiale (R).

2. Générateur (10) selon la revendication précédente 1, dans lequel le conduit d'amenée d'air (19) est réalisé pour amener l'air de refroidissement (C), par rapport à l'axe de rotation (D), sensiblement dans la direction radiale (R).

3. Générateur (10) selon l'une quelconque des revendications 1 ou 2, dans lequel
- le stator (20) et/ou le rotor (30) forme(nt) au moins par sections le conduit d'amenée d'air (19),
dans lequel, de préférence, le conduit d'amenée d'air (19) est réalisé entre :
o une structure porteuse de stator (22) du stator (20) et une structure porteuse de rotor (33) du rotor (30), et/ou
o un élément d'habillage de stator (21) du stator (20) et la structure porteuse de stator (22) du stator (20), et/ou
∘ un élément d'habillage de côté à l'abri du vent de rotor (31) du rotor (30) et la structure porteuse de stator (22) du stator (20), et/ou
- le stator (20) et/ou le rotor (30) forment au moins par sections la chambre d'évacuation d'air (27),
dans lequel la chambre d'évacuation d'air (27) est de préférence réalisée à l'intérieur du stator (20).

4. Générateur (10) selon la revendication précédente 3, présentant :
- deux faces frontales (17, 18), entre lesquelles s'étend l'espace intérieur de générateur (16) du générateur (10) dans une direction axiale (A), dans lequel
• l'au moins un conduit de sortie d'air (14) est disposé sur une face frontale (17, 18) du générateur (10), et/ou
• l'au moins un conduit d'entrée d'air (15) est disposé sur l'une des deux faces frontales du générateur (10).

5. Générateur (10) selon l'une quelconque des revendications précédentes 3 ou 4, dans lequel
- l'au moins un conduit de sortie d'air (14) est disposé sur la face frontale (17, 18) du générateur (10), qui est, dans un état de fonctionnement du générateur (10), la face frontale (17) opposée au vent (W), et/ou
- l'au moins un conduit d'entrée d'air (15) est disposé sur la face frontale (17, 18) du générateur (10), qui est, dans un état de fonctionnement du générateur (10), la face frontale (17) opposée au vent (W).

6. Générateur (10) selon l'une quelconque des revendications précédentes 1 à 5, dans lequel
le générateur (10), de préférence le stator (20), présente une chambre de pression (26),
dans lequel, de préférence, la chambre de pression (26) est disposée entre l'au moins un conduit de sortie d'air (14) et la chambre d'évacuation d'air (27) et relie en communication fluidique l'au moins un conduit de sortie d'air (14) à la chambre d'évacuation d'air (27).

7. Générateur (10) selon la revendication précédente 6, dans lequel
le dispositif de transport d'air (60) est disposé entre la chambre d'évacuation d'air (27) et la chambre de pression, dans lequel la chambre d'évacuation d'air (27) est reliée en communication fluidique à la chambre de pression par le dispositif de transport d'air (60),
dans lequel, de préférence, le dispositif de transport d'air (60) est disposé à l'intérieur du stator (20), en particulier à l'intérieur de la structure porteuse de stator (22),
dans lequel, de manière particulièrement préférée, le dispositif de transport d'air (60) comprend un ventilateur.

8. Générateur (10) selon l'une quelconque des revendications précédentes 1 à 7, dans lequel
au moins un silencieux (40) est disposé sur le générateur (10),
dans lequel, de préférence, l'au moins un silencieux (40) est disposé de manière amovible sur le générateur (10).

9. Générateur (10) selon la revendication précédente 8, dans lequel
l'au moins un silencieux (40) est disposé sur l'au moins un conduit de sortie d'air (14),
dans lequel, de préférence, l'au moins un silencieux (40) s'étend à travers l'au moins un conduit de sortie d'air (14) et/ou l'au moins un silencieux (40) s'étend au-delà de la face extérieure (13),
dans lequel l'au moins un silencieux (40) présente en particulier un silencieux tubulaire (40) et/ou un silencieux à coulisse (40) et/ou des éléments insonorisants.

10. Générateur (10) selon l'une quelconque des revendications précédentes 1 à 9, présentant une unité d'arrêt (50),
dans lequel l'unité d'arrêt (50) peut être modifiée de préférence entre une position ouverte et une position de blocage différente de la position ouverte,
dans lequel l'unité d'arrêt (50) est en particulier un volet à lames ou un volet tubulaire.

11. Générateur (10) selon l'une quelconque des revendications précédentes 1 à 10, dans lequel
l'au moins un conduit de sortie d'air (14) est de forme cylindrique ou polygonale.

12. Éolienne, présentant un générateur (10) selon l'une quelconque des revendications précédentes 1 à 11.
